# EUROPEAN PATENT SPECIFICATION

(11) **EP 4 503 272 B1**
(45) Date of publication and mention of the grant of the patent: **23.09.2026**
(21) Application number: 23843319.7
(22) Date of filing: 18.07.2023
(51) Int. Cl.: H01M 10/6567, H01M 10/6554, H01M 10/613, H01M 10/647, H01M 50/211, H01M 50/238, H01M 50/24, H01M 50/204

(54) **BATTERY MODULE AND BATTERY PACK COMPRISING COOLING PART**
BATTERIEMODUL UND BATTERIEPACK MIT EINEM KÜHLTEIL
MODULE DE BATTERIE ET BLOC-BATTERIE COMPRENANT UNE PARTIE DE REFROIDISSEMENT

(30) Priority: 18.07.2022 KR 20220088259; 17.07.2023 KR 20230092581
(43) Date of publication of application: 05.02.2025
(73) Proprietor: LG Energy Solution, Ltd., Seoul 07335 (KR)
(72) Inventor: KIM, Seung Joon, Daejeon 34122 (KR); CHI, Ho June, Daejeon 34122 (KR); KIM, Kyungwoo, Daejeon 34122 (KR); HWANG, Ji Soo, Daejeon 34122 (KR); KANG, Jongmo, Daejeon 34122 (KR)
(74) Representative: Plasseraud IP
(86) International application number: PCT/KR2023/010263
(87) International publication number: WO 2024/019473

(56) References cited:
- WO-A1-2016/116400
- JP-A- 2006 120 342
- JP-A- 2012 252 909
- KR-A- 20190 107 400
- KR-A- 20210 122 998
- KR-A- 20220 001 227
- KR-A- 20220 001 227
- KR-A- 20220 023 224
- US-A1- 2016 315 361

## Description

### Cross Citation with Related Application(s)

This application claims the benefit of Korean Patent Application No. 10-2022-0088259 filed on July 18, 2022 and Korean Patent Application No. 10-2023-0092581 filed on July 17, 2023 in the Korean Intellectual Property Office.

The present disclosure relates to a battery module and battery pack including a cooling part, and more particularly, to a battery module and battery pack that prevent thermal runaway phenomenon.

### [BACKGROUND]

Secondary batteries have attracted considerable attention as a power source of electric vehicles, hybrid electric vehicles, plug-in hybrid electric vehicles and the like that are being presented as a method of solving air pollution and the like, caused by conventional vehicles, diesel vehicles and the like using fossil fuels.

In small-sized mobile devices, one, or two, or three battery cells are used per device, while medium- or large-sized devices such as vehicles require high power and large capacity. Therefore, a middle- or large-sized battery pack in which a large number of battery cells are electrically connected is used due to necessity of high output and large capacity.

Since medium- or large-sized battery modules are preferably manufactured with as small a size and weight as possible, a prismatic battery, a pouch-shaped battery, and the like, which may be stacked with a high degree of integration and have light weight compared to capacity, are mainly used as a battery cell of the middle- or large-sized battery module.

Since battery cells constituting such a middle or large-sized battery module are secondary batteries which can be charged and discharged, such high-output large-capacity secondary battery generates a large amount of heat during a charging and discharging process.

When heat generated during the charging and discharging process is not effectively eliminated, heat accumulation may occur, which may accelerate deterioration of the battery cell, and according to circumstances, the battery module may catch fire or explode. Consequently, a middle or large-sized battery pack for vehicles or a middle or large-sized battery pack for power storage system, which is a high-output, large-capacity battery including a plurality of middle- or large-sized battery modules, requires a cooling system to cool battery cells mounted in the battery pack.

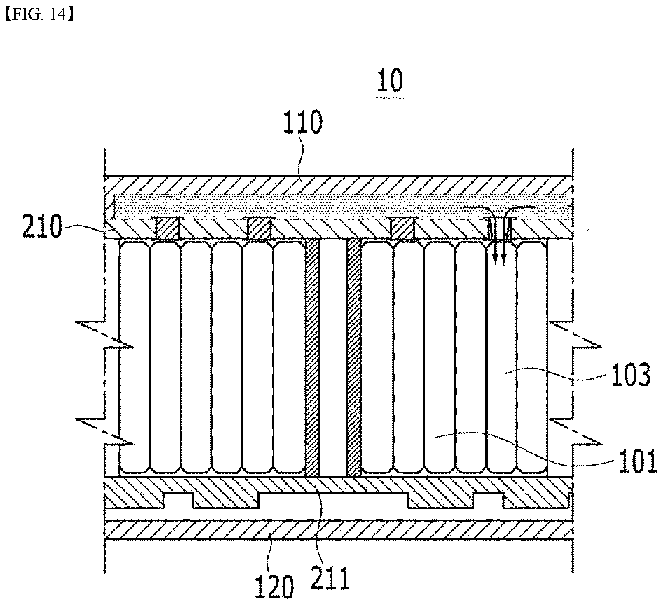

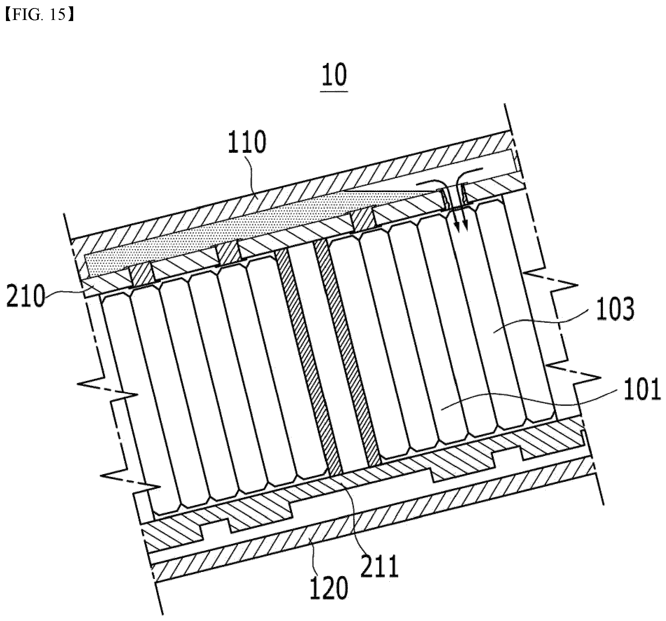

FIGS. 14 and 15 are vertical cross-sectional views of a battery module or battery pack 10 according to the prior art. Referring to FIG. 14, as the coolant (cooling water) stored in a coolant housing member 220 (water tank) is supplied to the ignited battery cell 103 through a through hole 230, the pressure (water pressure) of the coolant in the coolant housing member 220 gradually decreases. Therefore, as time passes, the rate at which coolant is injected into a battery cell 103 slows down.

Moreover, the pressure of the coolant in the coolant housing member 220 is generally proportional to the height of the coolant, but the coolant housing member 220 (water tank) is usually formed along the housing direction of the battery cell stack, so that the height is lower than the width of the coolant housing member 220. Therefore, the pressure of the coolant injected into the battery cells 103 has no choice but to become further lower. This becomes a factor that inhibits rapid coolant injection.

Further, when the vehicle equipped with the battery pack is located on an inclined surface, etc., and the coolant housing member 220 of the battery pack is also located obliquely, a case may occur in which all of the coolant in the coolant housing member 220 is not supplied to the battery cell stack as shown in FIG. 15.

Further, as shown in FIGS. 14 and 15, the coolant is supplied from the upper coolant housing member 220 to the lower battery cell stack by gravity along the open through hole 230. Therefore, the coolant housing member 220 has no choice but to be located only in an upper part of the battery cell stack, and there is a limitation that the coolant housing member 220 cannot be provided in a lower part. FIGS. 14 and 15 show a case in which a coolant housing space is not provided in the lower part and only the heat dissipation plate 211 is provided. Examples of the background art can be found in WO 2016/116400 A1 and KR 2022 0001227 A.

### [DETAILED DESCRIPTION OF THE INVENTION]

### [Technical Problem]

Therefore, the present disclosure was designed to solve the problems as above, and an object of the present disclosure is to allow the coolant for the cooling part provided inside the battery module and/or battery pack to be quickly and directly injected into the ignited battery cells in order to prevent heat energy from being transferred to adjacent battery cells when a battery cell ignites or explodes.

Another object of the present disclosure is to provide a battery module and/or battery pack including a cooling part, which has a structure that can efficiently suppress the thermal runaway phenomenon of battery cells while overcoming the difficulty of coolant injection on a ramp and minimizing the volume increase of the battery module and/or battery pack.

However, the technical problems to be solved by embodiments of the present disclosure are not limited to the above-described problems, and can be variously expanded within the scope of the technical idea included in the present disclosure.

### [Technical Solution]

According to the present invention, there is provided a battery pack comprising: a battery cell stack in which a plurality of battery cells are stacked; a frame that houses the battery cell stack; and a cooling part disposed on the battery cell stack, wherein the cooling part comprises a coolant housing member including an upper plate and a lower plate; an elastic member disposed in the inner space of the coolant housing member; and a sealing member that seals at least one through hole formed in the lower plate of the coolant housing member and is meltable by an increase in the temperature of the battery cell, and wherein a coolant is housed in a space between the elastic member and the lower plate of the coolant housing member, and the elastic member expands as the coolant is housed.

The elastic member is membrane-shaped, and covers a lower plate of the coolant housing member including the at least one through hole.

When the sealing member melts by an increase in the temperature of the battery cell, the elastic member may press the coolant and supply the coolant to the battery cell stack.

While the coolant is supplied to the battery cell stack, the elastic member gradually may contract as the pressure with which the coolant has pressed the elastic member gradually decreases.

The edge of the membrane-like elastic member is fixed to or near the edge of the lower plate of the coolant housing member.

The edge of the elastic member is interposed between respective edges of the upper and lower plates of the coolant housing member, and then subjected to seaming process, or the edges of the upper and lower plates of the coolant housing member are subjected to embossing process, the edge of the elastic member may be interposed therebetween, and then mechanically fastened.

Before the sealing member melts, the elastic member may expand to a maximum within the coolant housing member.

The lower plate of the coolant housing member may be a heat dissipation plate.

The coolant housing member has a structure integrated into the frame, and the upper plate of the coolant housing member may constitute a part of the frame.

The coolant housing member may have a structure for storing the coolant.

The coolant housing member is a water tank, and the coolant may be cooling water.

The coolant housing member includes an inlet/outlet port for allowing a coolant to flow in and out, and the inlet/outlet port may be located in a space between the lower plate of the coolant housing member and the elastic member.

The battery pack comprises at least one partition wall disposed in the inner space of the coolant housing member to separate the inner space into a plurality of zones, the at least one partition wall is disposed perpendicularly to the one surface of the coolant housing member and disposed in the longitudinal direction of the battery cell, and the elastic member may be individually provided across each of the plurality of zones.

The sealing member may be made of a thermoplastic polymer resin.

A melting point of the elastic member may be higher than a melting point of the sealing member.

The elastic member may be made of a material that is contractable and expandable while having a waterproof property.

The elastic member may have a double structure surrounded by a band-shaped member that is contractable and expandable in a waterproof fabric.

The cooling part may be disposed on at least one of the upper and lower surfaces of the battery cell stack.

The frame comprises an upper plate of the frame disposed on the upper side of the battery cell stack; a lower plate of the frame disposed on the lower side of the battery cell stack; and a side surface plate of the frame disposed on the side surface of the battery cell stack, between the upper plate and the lower plate, wherein the lower plate of the coolant housing member may be spaced apart from the frame by a predetermined distance to form the coolant housing member.

In the battery pack according to another embodiment of the present disclosure, the battery cell stacks are provided in plural numbers, and the cooling part may be disposed on the plurality of battery cell stacks.

### [Advantageous Effects]

As mentioned above, the battery module and/or battery pack according to the present disclosure houses a coolant in the inner space of the cooling part, and includes an elastic member that is contractable and expandable, so that when the battery cell ignites, the ignited battery cell can be quickly cooled.

Also, even if the coolant housing space is disposed obliquely, all of the coolant in the coolant housing space can be supplied to the ignited battery cell.

Further, the thermal runaway phenomenon of battery cells can be efficiently suppressed while minimizing the increase in volume of the battery module and/or battery pack.

In addition, when the sealing member added to the cooling part melts by the high temperature of the battery cell, the coolant is directly injected into the battery cell from the cooling part, so that the temperature of the battery cell can be quickly lowered.

### [BRIEF DESCRIPTION OF THE DRAWINGS]

FIG. 1 is a schematic diagram of a battery module or battery pack according to an embodiment of the present disclosure;
FIG. 2 is a vertical cross-sectional view of a battery module or battery pack according to an embodiment of the present disclosure;
FIG. 3 shows a case where the battery cell is cooled by the elastic member provided in the cooling part of FIG. 2 when the battery cell ignites;
FIG. 4 is a vertical cross-sectional view of a battery module or battery pack according to another embodiment of the present disclosure;
FIG. 5 is a plan view of embodiments of a heat dissipation plate applicable to the cooling parts of FIGS. 2 to 4;
FIG. 6 is a partially enlarged view of FIG. 2;
FIG. 7 is an enlarged vertical cross-sectional view of a battery module or a battery pack in which a sealing member is added to a heat dissipation plate in which a groove is formed.
FIG. 8 is a vertical cross-sectional view of a state in which a sealing member is added to a heat dissipation plate in which a groove is formed;
FIG. 9 is a schematic diagram of an upper plate, a heat dissipation plate, a coolant housing member, and an elastic member of the battery module or the battery pack of FIG. 2;
FIG. 10 is a conceptual diagram showing an example of a method of fixing the edge of the elastic member of FIG. 9;
FIG. 11 is a conceptual diagram showing another example of a method of fixing the edge of the elastic member of FIG. 9;
FIG. 12 schematically shows a case in which a plurality of battery cell stacks (cell module assemblies) are housed in a battery pack according to an embodiment of the present disclosure;
FIG. 13 is a vertical cross-sectional view of the battery pack according to an embodiment of the present disclosure of FIG. 12 , which shows a case where a cooling part is included on the plurality of battery cell stacks of FIG. 12; and
FIGS. 14 and 15 are vertical cross-sectional views of a battery module or battery pack according to the prior art.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

In addition, since the upper surface/lower surface or the upper part/lower part of a specific member may be determined differently depending on the direction used as a reference, "upper surface" and "lower surface" as used herein refer to two surfaces of the member facing each other on the z-axis, and "upper part" and "lower part" are defined as being located in opposite directions on the z-axis of the corresponding member.

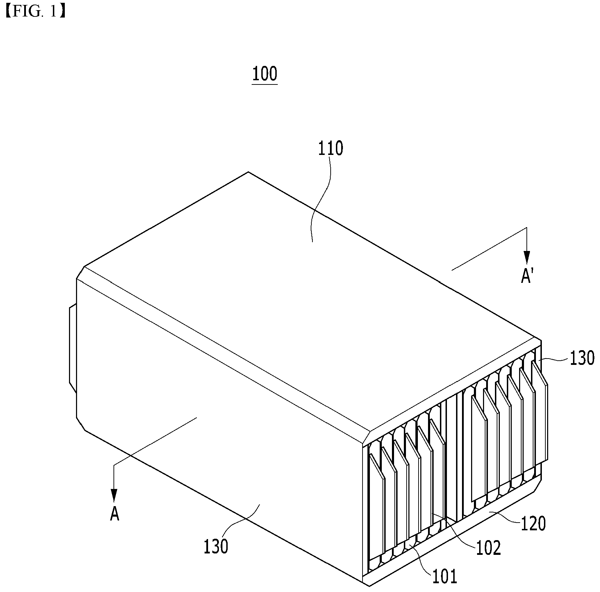

FIG. 1 is a schematic diagram of a battery module or battery pack according to an embodiment of the present disclosure.

The battery modules or battery packs within the meaning of the specification of the present disclosure differ only in scale, but they are the same in that a cooling part described in detail below is provided on at least one surface of the upper part and the lower part of the battery cell stack.

Referring to FIG. 1, the battery module or battery pack 100 according to the present disclosure includes a frame that houses a battery cell stack 101 therein in which a plurality of battery cells are stacked, and a cooling part disposed on the upper and lower surfaces of the battery cell stack 101.

As a plurality of battery cells, bidirectional pouch-type battery cells in which electrode leads 102 protrude in mutually opposite directions are shown in FIG. 1, but unlike the same, it goes without saying that a unidirectional pouch-type battery cell in which a cathode lead and an anode lead protrude in the same direction as each other can also be used. Further, the battery cells may be pouch-type battery cells, but the present disclosure is not limited to those described above, and various modifications and changes can be made, such as being applicable to prismatic battery cells or cylindrical battery cells.

The frame of the battery module or battery pack (hereinafter referred to as "frame") includes an upper plate 110 disposed in an upper part of the battery cell stack 101, a lower plate 120 disposed in a lower part of the battery cell stack 101, and a side surface plate 130 disposed between the upper plate 110 and the lower plate 120 and disposed on a side surface of the battery cell stack 101.

Further, on the outside of the direction in which the electrode leads 102 of the battery cells protrude, an end plate (not shown) may be coupled with the upper plate 110, the lower plate 120 and the side surface plate 130, thereby assembling a frame.

Further, the shape of the frame is not limited to the structure shown in FIG. 1, and unlike those shown in FIG. 1, the frame may be in the form of a mono frame or a U frame. That is, in some cases, the upper plate 110 may not be provided separately, and the upper surface of the cooling part, which will be described later, may replace the upper plate of the frame.

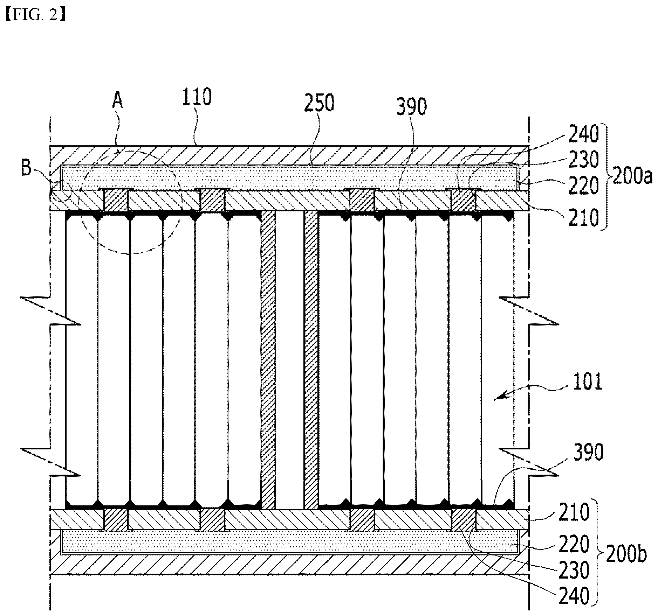

FIG. 2 is a vertical cross-sectional view of a battery module or battery pack according to an embodiment of the present disclosure.

Referring to FIG. 2, the battery module or battery pack is configured such that a battery cell stack 101 in which a plurality of battery cells are stacked is housed in a frame including an upper plate 110 and a lower plate 120.

The cooling part 200a includes a coolant housing member 220 that houses a coolant. One surface of the coolant housing member 220 is disposed on at least one surface of the battery cell stack 101. One surface of the coolant housing member 220 may be a heat dissipation plate 210. The other side facing one surface of the coolant housing member 220 may be the upper plate 110.

For reference, in FIGS. 1 to 11, an upper plate 110, a lower plate 120, and a side surface plate 130 refer to the upper plate of the frame, the lower plate of the frame, and the side surface plate of the frame, respectively, and for convenience, they were abbreviated as an upper plate 110, a lower plate 120, and a side surface plate 130. This should be understood as a separate concept from the upper plate of the coolant housing member 220 and the lower plate of the coolant housing member 220 on the basis of the coolant housing member 220.

Further, as mentioned above, when the coolant housing member 220 is provided in the upper part of the battery cell stack 101, the upper plate of the coolant housing member 220 may be the upper plate of the frame (i.e., the upper plate 110). Similarly, when the coolant housing member 220 is provided in the lower part of the battery cell stack 101, the lower plate of the coolant housing member 220 may be the lower plate of the frame (i.e., the lower plate 120).

Hereinafter, for convenience, the upper plate 110 and the heat dissipation plate 210 will be described as an example. The heat dissipation plate 210 is coupled to the upper plate 110 at a predetermined separation distance, and the space formed at the separation distance becomes the coolant housing member 220. Therefore, the upper plate 110, the heat dissipation plate 210, and the coolant housing member 220 becomes an integrated structure. The cooling part 200a is integrally coupled with the upper plate 110 and is located in the upper part of the battery cell stack 101.

However, the present disclosure is not limited to those described above. For example, in order to form the coolant housing member 220, the upper plate 110 of the frame does not necessarily need to be one component of the coolant housing member 220. It does not matter if the coolant housing member 220 itself has a shape capable of storing a coolant, and it is sufficient as long as it has a shape and structure that is coupled to the battery cell stack 101, with a heat dissipation plate 210 including a through hole 230 described below being interposed therebetween.

Further, the cooling part 200a' includes a heat dissipation plate 210, and a coolant housing member 220 that houses a coolant. The heat dissipation plate 210 is coupled to the lower plate 120 at a predetermined separation distance, and the space formed at the separation distance becomes the coolant housing member 220. Therefore, the lower plate 120, the heat dissipation plate 210, and the coolant housing member 220 become an integrated structure.

That is, the cooling part 200a' is integrally coupled with the lower plate 120, and is located in the lower part of the battery cell stack 101. Similarly, the lower plate 120 of the frame does not necessarily form the coolant housing member 220. It does not matter if the coolant housing member 220 itself has a shape that stores a coolant, and it is sufficient if it is a shape and structure coupled to the battery cell stack 101, with a heat dissipation plate 210 including a through hole 230 (described later) being interposed therebetween. The heat dissipation plate 210 is formed with a through hole 230, and a sealing member 240 is added to the through hole 230.

The sealing member 240 is made of a material that can be melted by high-temperature gas or sparks discharged from the battery cell. That is, when the battery cell is in a normal state, the sealing member 240 maintains a state in which the through hole 230 is sealed, but when the temperature rises as in the battery cell 103 or an ignition occurs, the sealing member 240 melts and the through hole 230 opens. The coolant in the coolant housing member is directly injected into the battery cell stack 101 through an opened through hole 230. Through this process, an overheated or ignited battery cell can be rapidly cooled, thereby quickly preventing thermal runaway from expanding.

The sealing member 240 is a material that can be melted by high-temperature gas or sparks ejected by venting of a battery cell whose temperature has increased. Thus, a thermoplastic polymer resin with a melting point of about 200°C or less can be applied, and for example, as the thermoplastic polymer resin, a material with a melting point of about 100°C or more and 200°C or less, such as polyethylene or polypropylene may be used.

On the other hand, in the case where cooling water is applied as a coolant, considering that the coolant is directly injected into the battery cell, it is necessary to prevent the flame of the battery cell from growing or exploding due to the injection of the cooling water. Therefore, it is preferable that the additive contained in the cooling water does not contain a flammable material. Alternatively, in the case where a combustible material is included as the additive, the amount of the additive may be the extent that can prevent secondary explosion to the battery cell, and at the same time, may be the extent that can be used as an antifreeze to prevent the cooling water from freezing.

On the other hand, the coolant housing member 220 houses the coolant therein. More specifically, the cooling part 200a according to the present disclosure includes an elastic member 250 that is contractable/expandable in the inner space of the coolant housing member 220. The elastic member 250 has a membrane shape and is disposed across the inner space of the coolant housing member 220. When the heat dissipation plate 210 includes at least one through hole 230, it is preferable that elastic member 250 having a membrane shape completely covers at least one through hole 230. Moreover, the elastic member 250 covers at least a part of the heat dissipation plate 210. Therefore, the elastic member 250 can largely divide the inner space of the coolant housing member 220 into two (upper and lower in the embodiment of FIG. 2) zones. That is, it is divided into a space between the heat dissipation plate 210 including the through hole 230 and one surface of the elastic member 250, and a space between the other surface of the elastic member 250 and the inner wall of the coolant housing member 220. Among these, the coolant is housed in a space between the elastic member 250 and the heat dissipation plate 210 including the through hole 230 in the inner space of the coolant housing member 220.

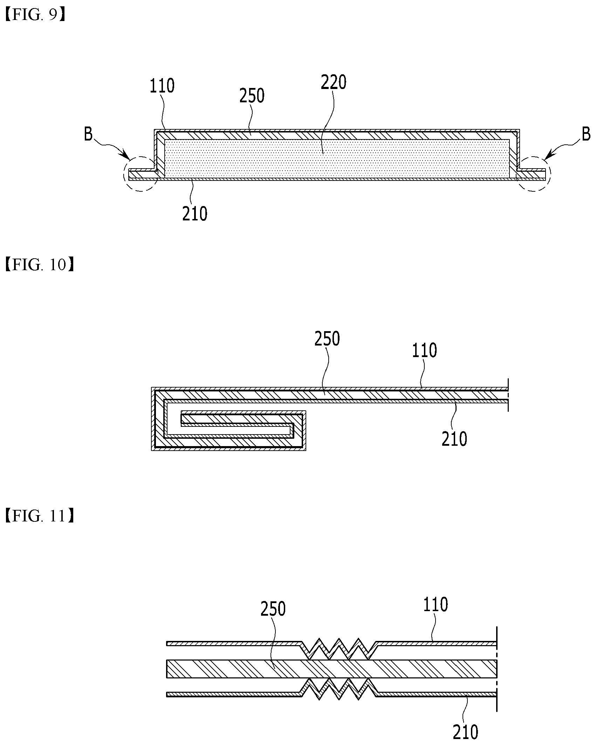

The edge of the elastic member 250 is one surface of the coolant housing member 220, and may be fixed to the edge of the surface disposed adjacent to the battery cell stack. That is, in the embodiment of FIG. 2, it may be fixed to a portion where the coolant housing member 220 and the heat dissipation plate 210 contact each other. Alternatively, the edge of the elastic member 250 may be fixed to the inner wall of the coolant housing member 220. An example of a method for fixing the edge of the elastic member 250 to the inner wall of the coolant housing member 220 or a portion in contact with the upper plate 110 and/or the heat dissipation plate 210 will be described later with reference to FIGS. 9 to 11. However, as will be described later, in order for all the coolant housed therein to be supplied to the battery cell stack 101 through the through hole 230 while the elastic member 250 contracts, it is preferable that the elastic member 250 is located closer to the heat dissipation plate 210 among the inner walls of the coolant housing member 220. Alternatively, the edge of the elastic member 250 may be fixed to the heat dissipation plate 210, and the coolant may be housed in a space between the heat dissipation plate 210 and the elastic member 250. The embodiment of FIG. 2 shows a case where the coolant is housed to the maximum extent in the inside of the elastic member 250 and the coolant expands to the maximum extent.

The coolant housing member 220 may be a water tank that stores a coolant therein, or may have a structure that includes an inlet/outlet port (not shown) for allowing a coolant to flow in and out. In the case of a structure in which the coolant flows in and out of the coolant housing member 220, the elastic member 250 has a structure that covers not only the through hole 230 but also the inlet/outlet port. In other words, the structure may otherwise be such that the inlet/outlet port are located in the space between one surface of the coolant housing member where the through hole 230 is located and the elastic member 250, and the coolant flows through the inlet/outlet port while the coolant is housed in the space between the elastic member 250 and one surface of the coolant housing member where the through hole 230 is located.

By high-temperature gas or sparks discharged from the battery cells 103 where the temperature of the battery cell stack 101 has increased, the sealing member 240 added to the through hole 230 of the heat dissipation plate 210 melts. Therefore, the coolant housed in the space between the heat dissipation plate 210 including the through hole 230 and the elastic member 250 is supplied to the battery cell 103 through the open opening 255 and the open through hole 230.

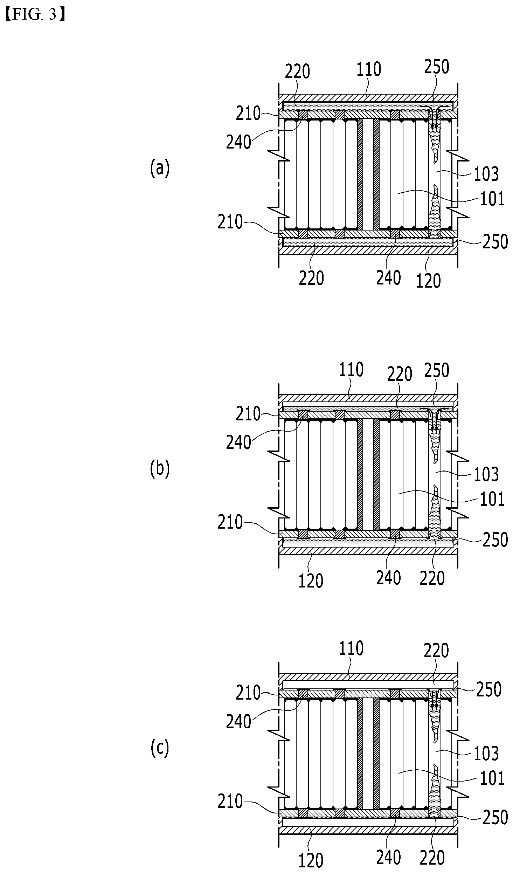

The elastic member 250, which has expanded to the maximum extent due to the internal pressure of the coolant as shown in FIG. 2, is configured such that as the coolant housed inside the elastic member 250 escapes, the pressure with which the coolant has pressed the elastic member 250 gradually decreases, and the elastic member 250 gradually contracts as shown in FIG. 3.

Unlike those shown in FIG. 14 regarding the prior art, the coolant in the elastic member 250 located within the coolant housing member 220 may be supplied to the battery cell 103 at a faster rate due to the pressure caused by the contraction of the elastic member 250. Additionally, the coolant present in the space between the elastic member 250 and the heat dissipation plate 210 can be supplied to the battery cell 103 without any residue.

The elastic member 250 is made of a material that has elasticity to allow expansion and contraction, and is not damaged by high-temperature gas or sparks discharged from the battery cell 103 as much as possible. Further, the elastic member 250 contains a coolant therein and thus, is made of a material that has chemical resistance to the coolant (cooling water, etc.).

The elastic member 250 may be made of a material that is contractable and expandable while having a waterproof property. For example, a polymer resin, rubber, or silicone membrane that has a waterproof function while being contractable and expandable may be used. As an example, the elastic member 250 may have a shape of a rubber membrane which is made of rubber.

Alternatively, the elastic member 250 may have a double-layered structure a band-shaped member that is contractable and expandable surrounded by a fabric having a waterproof property. As an example, it may be a double-layered structure in which an elastic material is disposed on a material having waterproof performance (fire-resistant fabric, etc.) to apply pressure. As an example, the elastic member 250 may have a double-layered structure in which a rubber band is disposed on a fire-resistant fabric.

The present disclosure is not limited to those described above, and may be modified and changed in various ways, for example, one of the cooling part 200a located in an upper part of the battery cell stack 101 and the cooling part 200a' located in a lower part of the battery cell stack 101 includes only a heat dissipation plate 210, and may not include the coolant housing member 220.

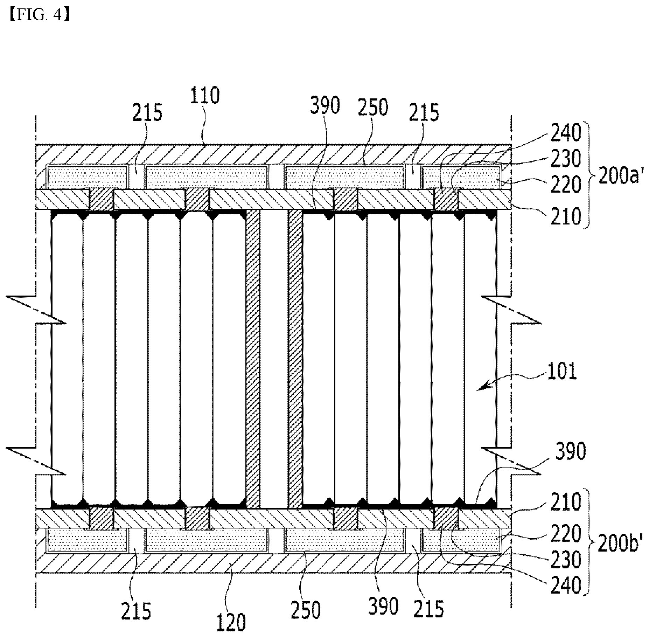

FIG. 4 is a vertical cross-sectional view of a battery module or battery pack according to another embodiment of the present disclosure, which shows a cooling part 200b that is a partially modified version of the cooling part 200a of FIG. 2. For a description regarding the components the same as the cooling part 200a of FIG. 2 among the components of the cooling part 200b of FIG. 4, refer to the description regarding FIG. 2.

In the embodiment of FIG. 4, the partition wall 215 may cross the coolant housing member 220 in the vertical direction to define the inner space. For example, the partition wall 215 may have a plate shape that connects the heat dissipation plate 210 and the upper plate and is arranged in parallel with the side surface plate 130 (see FIG. 1). In such a case, each battery cell of the battery cell stack 101 may be arranged in parallel with the longitudinal direction.

The coolant housing member 220 is divided into a plurality of zones arranged in a row in the transverse direction with respect to the partition wall 215. An elastic member 250 is provided in each of the plurality of zones defined within the coolant housing member 220, and the coolant is housed in each of the plurality of elastic members 250. When the temperature of the battery cell 103 rises or an ignition occurs, the coolant can be dividedly supplied at a plurality of times. For other descriptions regarding the elastic member 250, refer to the descriptions given above in FIGS. 2 and 3.

The number of the partition wall 215 is not limited to those shown in FIG. 4, and may be one, or plural, and may be modified and changed in various ways, such as including a plurality of partition walls 250a so as to suit the environment in which the invention is realized

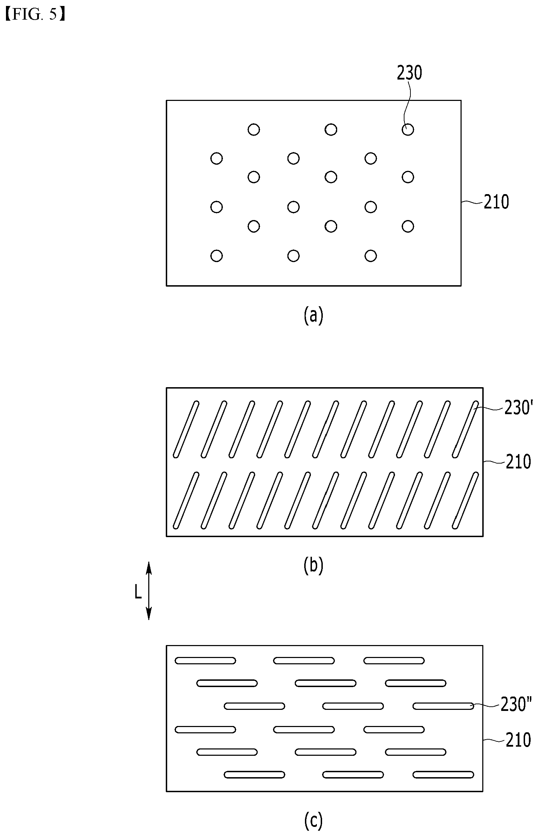

The shape of the partition wall 215 is also sufficient as long as it can separate and define the inner space of the coolant housing member 220, and it does not necessarily have to be a flat planar shape, and various modifications and changes are possible. FIG. 5 is a plan view of embodiments of a heat dissipation plate 210 applicable to the cooling parts of FIGS. 2 to 4. FIG. 5a shows a state in which a through hole 230 is formed in the heat dissipation plate 210.

In the heat dissipation plate 210, through-holes 230 formed in planar circular shape are arranged to be spaced apart at regular intervals along the horizontal and vertical directions.

Even when any battery cell ignites, a through hole must be formed at a position where cooling water can be supplied to the ignited battery cell. That is, it is preferable that at least one through hole is disposed in each battery cell so that cooling water can be supplied to all battery cells. Therefore, the number and interval of through holes can be adjusted depending on the number and size of the battery cells.

FIGS. 5(b) and 5(c) are plan views of an embodiment in which the heat dissipation plate 210 of FIG. 5(a) is partially modified.

Referring to FIGS. 5(b) and 5(c), the shape of the through holes 230' and 230" formed in the heat dissipation plate 210 is different from the shape of the through hole 230 in FIG. 5.

When the battery cell is arranged so that the short axis direction of the heat dissipation plate 210 shown in FIGS. 5(b) and 5(c) is parallel to the longitudinal direction (L) of the battery cell, the through hole 230' is formed obliquely so that one through hole can cover two or more battery cells, and the through hole 230" is formed in a direction that is perpendicular to the longitudinal direction (L) of the battery cells so as to cover two or more battery cells.

In the case where a through hole of this type is formed, if the sealing member melts by heat generation and explosion of one of the battery cells, a through hole is formed large. Thus, cooling water may be added to the surface of a battery cell that is located adjacent to the heated and exploded battery cell, but is not heated or exploded. Therefore, by lowering the temperature of battery cells that are not heated or exploded, it is possible to prevent thermal runaway phenomenon from occurring.

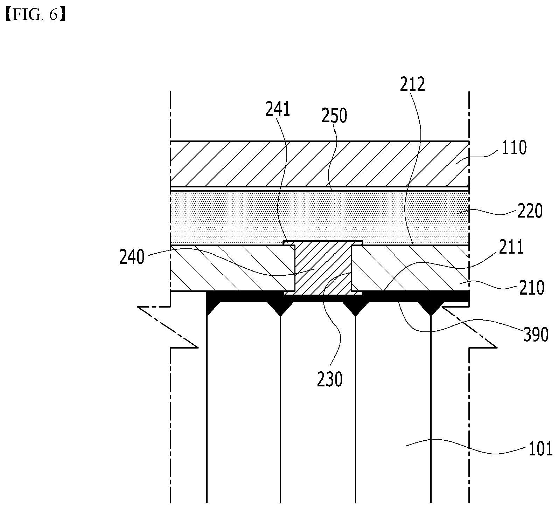

FIG. 6 is a partially enlarged view of FIG. 2. FIG. 6 shows an enlarged view of the portion marked "A" in FIG. 2. A space may be created between the battery cell stack 101 and the heat dissipation plate 210, and a deviation in the distance between the battery cell and the heat dissipation plate 210 may occur for each individual battery cell. In this way, the space formed between the battery cell stack 101 and the heat dissipation plate 210 causes reduction of the heat dissipation performance for discharging heat inside the battery module and/or battery pack to the outside.

To prevent such problems, the space between the battery cell stack 101 and the heat dissipation plate 210 may be filled with a thermal interface material (TIM) 390.

Since the thermal interface material 390 widens the thermal contact point between the battery cell stack 101 and the heat dissipation plate, heat energy generated in the battery cell stack 101 can be quickly discharged.

However, if the heat energy discharged from the battery cell does not directly reach the sealing member due to the heat transfer material 390, the sealing member may not reach the melting temperature. Therefore, addition of the thermal interface material can be omitted.

Alternatively, the thermal interface material is not formed in the lower part of the through hole of the heat dissipation plate, and may be in a shape of being added only to other parts. In such a case, even if a thermal interface material is added, the heat energy of the vented battery cell can be directly transferred to the sealing member without being lost, so the sealing member melts and allows a coolant to supply to the vented battery cell.

On the other hand, the sealing member 240 is added to the through hole 230 penetrating through the heat dissipation plate 210. For example, the sealing member 240 fills the through hole 230, and includes an extension part 241 that further extend outward from the periphery of the through hole 230 at the inner side surface 211 of the heat dissipation plate 210 and the outer side surface 212 of the heat dissipation plate.

Since the extension part 241 is formed in the sealing member 240, the sealing member 240 can be prevented from being removed by the pressure of the cooling water flowing through the coolant housing member, thereby preventing the through hole from opening.

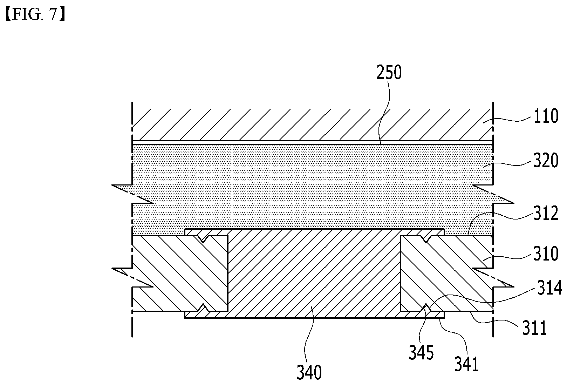

FIG. 7 is an enlarged vertical cross-sectional view of a battery module or a battery pack in which a sealing member is added to a heat dissipation plate in which a groove is formed.

Referring to FIG. 7, a coolant housing member 320 is formed between the upper plate 110 and the heat dissipation plate 310, and a sealing member 340 is added to the through hole of the heat dissipation plate 310.

The sealing member 340 includes an extension part 341, and a groove 314 is formed in a portion where the extension part 341 is formed among the inner side surface 311 of the heat dissipation plate and the outer side surface 312 of the heat dissipation plate.

Since a part of the sealing member constituting the extension part 341 is inserted into the groove 314 to form an insertion part 345, it can more effectively prevent the sealing member from being removed by the water pressure of the cooling water, and opening the through hole.

In order to manufacture a sealing member including an extension part in this way, it is possible to use an insert injection method in which a resin for the sealing member is imported and manufactured for the heat dissipation plate in which the grooves are formed. Alternatively, for the portion that passes through the through hole among the sealing member, a central part of the sealing member having a shape and size corresponding to the shape and size of the through hole may be prepared, and a separate member may be added to the central part of the sealing member to form an extension part. At this time, the coupling method between the central part of the sealing member and the separately added extension is not limited, such as adhesion using an adhesive material, screw fastening, or forced fitting. Further, the central part of the sealing member is made of a thermoplastic polymer resin that melts at high temperature, and the material of the separately added extension part may be made of a material that does not melt at high temperature.

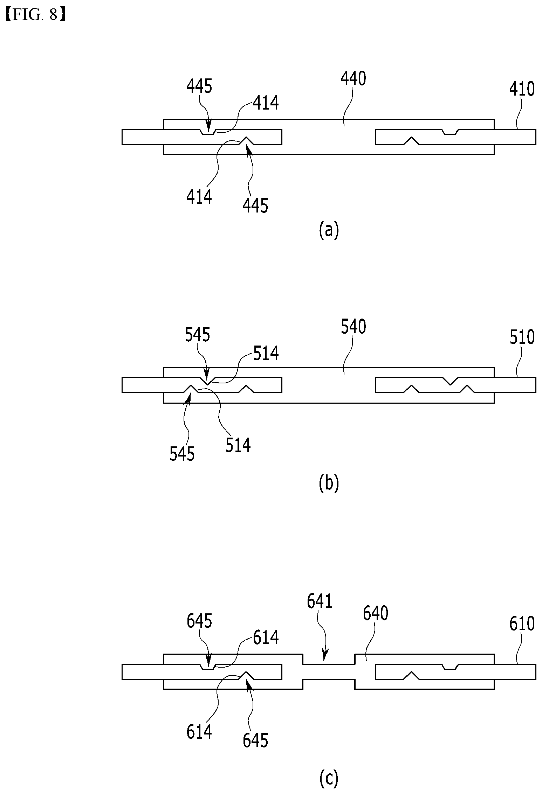

FIG. 8 is a vertical cross-sectional view of a state in which a sealing member is added to a heat dissipation plate in which a groove is formed.

Referring to FIG. 8, sealing members 440, 540 and 640 are added to the heat dissipation plates 410, 510 and 610 , respectively.

Each of the heat dissipation plates 410, 510 and 610 has grooves 414, 514, and 614 formed in the portions where they meet the extension parts, and insertion parts 445, 545 and 645 are formed inside the grooves 414, 514, and 614.

The vertical cross section of the portion where the grooves 414, 514 and 614 are formed in the heat dissipation plates 410, 510 and 610 may be formed in one or more shapes selected from the group consisting of polygons including triangles, trapezoids, etc., semicircles, and may be formed by mixing them.

Referring to FIG. 8(c) in FIG. 8, the thickness of the central part 641 of the sealing member 640 is formed to be thinner than the thickness of the central part of the sealing member 410 and the central part of the sealing member 510. When the thickness of the portion that seals the through hole is formed relatively thin in this way, the time required for the sealing member to melt and the through hole to open can be shortened, so that a coolant can be quickly supplied to the battery cell.

Further, the heat dissipation plate may constitute a coolant housing member coupled to the upper and lower plates of the frame, and the heat dissipation plate may constitute the other surface facing one surface coupled to the upper plate and the lower plate.

Next, a method in which the edge of the elastic member 250 is fixed to the upper plate 110, the heat dissipation plate 210 and/or the coolant housing member 220 will be described as examples.

FIG. 9 is a schematic diagram of an upper plate, a heat dissipation plate, a coolant housing member, and an elastic member of the battery module or the battery pack of FIG. 2. First, the scale of the upper plate 110, heat dissipation plate 210, coolant housing member 220, and elastic member 250 in FIGS. 2 and 9 to 11 are not limited to those illustrated, and may be modified and changed in various ways to suit the environment in which the invention is realized.

A coolant housing member 220 is formed between the upper plate 110 and the heat dissipation plate 210 of the battery module or battery pack. Further, an elastic member 250 is disposed to roughly divide the inner space of the coolant housing member 220 into two. At this time, as described above in FIG. 2, the edge of the elastic member 250 may be fixed to the inner wall of the coolant housing member 220 or a portion that contacts the upper plate 110 and/or the heat dissipation plate 210. In FIG. 9, the edge of the elastic member 250 is indicated by B. FIG. 9 represents a plan view by a schematic diagram. Thus, in the present disclosure, when the battery module or battery pack is viewed three-dimensionally (3D), the descriptions of FIGS. 9 to 11 regarding the edge B of the elastic member 250 can be applied to both the front/back and left/right edges of the battery module or battery pack.

FIG. 10 is a conceptual diagram showing a case where seaming process is performed as an example of a method of fixing the edge of the elastic member of FIG. 9.

For example, in a state where the edge of the elastic member 250 is interposed between the edge of the upper plate 110 and the edge of the heat dissipation plate 210, the edge of the upper plate 110, the edge of the heat dissipation plate 210, and the edge of the elastic member 250 can all be subjected to seaming process. In other words, the edges can be overlapped and pressed while being bent. The shape and structure in which the edges of the upper plate 110, the edge of the heat dissipation plate 210, and the edges of the elastic member 250 are subjected to seaming process are not limited to FIG. 10 and can be modified, changed and applied in various ways.

FIG. 11 is a conceptual diagram showing a case in which embossing process and mechanical fastening methods are combined as another example of a method of fixing the edge of the elastic member of FIG. 9.

For example, first, the edges of the upper plate 110 and the edges of the heat dissipation plate 210 are subjected to embossing process to have uneven portions. The edge of the upper plate 110 and the edge of the heat dissipation plate 210 are subjected to embossing process to increase roughness and prevent the elastic member 250 from slipping. The edge of the elastic member 250 was temporarily fixed between the edge of the upper plate 110 and the edge of the heat dissipation plate 210 subjected to embossing process, and then the edge of the upper plate 110, the edge of the heat dissipation plate 210, and the edge of the elastic member 250 can all be mechanically fastened using, for example, rivets/bolts. The shape and structure of the embossing process the edge of the upper plate 110 and the edge of the heat dissipation plate 210 are subjected to are not limited to those shown in FIG. 11 and can be modified, changed and applied in various ways.

On the other hand, regarding the method of fixing the edge of the elastic member, the present disclosure is not limited to those described above in FIGS. 9 to 11, and various other processing methods can be modified, changed, and applied.

Further, in FIGS. 9 to 11, the case where the coolant housing member 220 is provided on the upper part of the battery cell stack 101 has been described, but this can be similarly applied to the case where the coolant housing member 220 is provided in the lower part of the battery cell stack 101.

The battery module or battery pack including one battery cell stack 101 according to the present disclosure and the cooling part included therein have mainly been described above with reference to the accompanying drawings, but the cooling part according to embodiments of the present disclosure can be applied similarly to a battery pack including a plurality of battery cell stacks (cell module assemblies) 101.

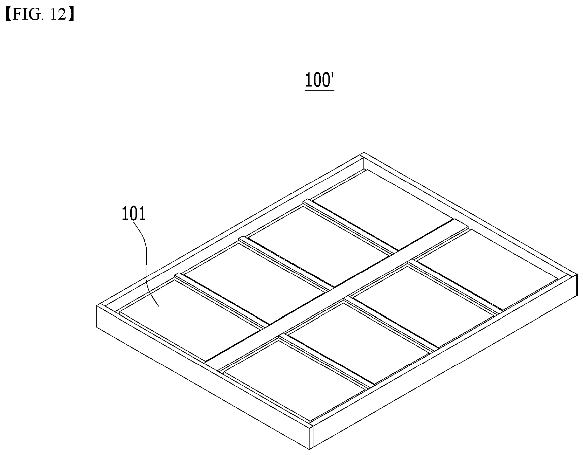

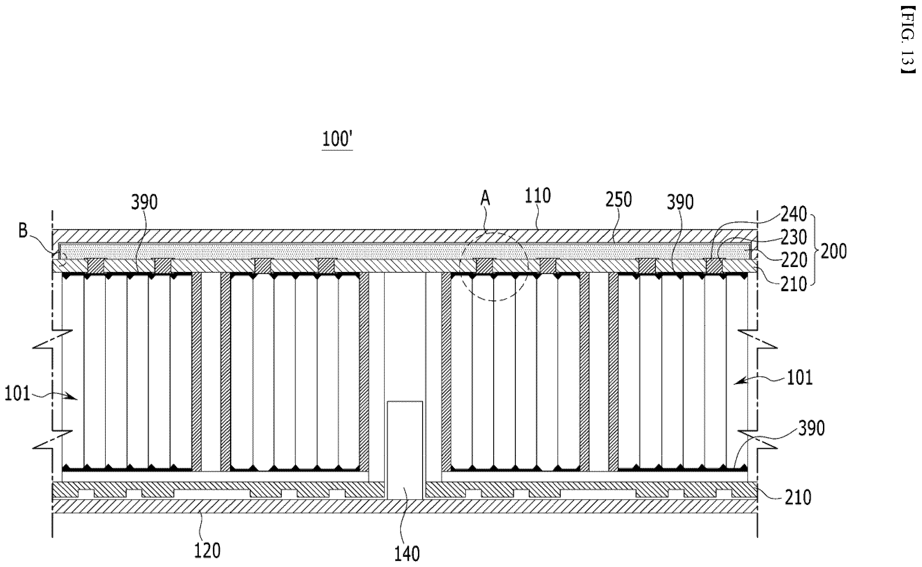

The case where a plurality of battery cell stacks (cell module assemblies) 101 are stacked to form a battery pack will be described with reference to FIGS. 12 and 13. FIG. 12 schematically shows a case in which a plurality of battery cell stacks 101 are housed in a battery pack 100' according to an embodiment of the present disclosure. FIG. 13 is a vertical cross-sectional view of the battery pack according to an embodiment of the present disclosure of FIG. 12, which shows a case where a cooling part 200 is included on the plurality of battery cell stacks 101 of FIG. 12. In the battery pack 100' of FIGS. 12 and 13, a case where one cooling part 200 is placed on a plurality of battery cell stacks 101 is illustrated. The cooling part described above in FIGS. 1 to 11 can be applied similarly to the battery pack 100' in which a plurality of battery cell stacks 101 are stacked.

Referring to FIG. 13, a cooling part 200 may be located on a plurality of battery cell stacks (cell module assemblies) 101.

The frame includes an upper plate 110 disposed in an upper part of the plurality of battery cell stacks 101, a lower plate 120 disposed in a lower part of the plurality of battery cell stacks 101, and a side surface plate (not shown) disposed between the upper plate 110 and the lower plate 120 and disposed on both sides of the plurality of battery cell stacks 101. Further, a cross beam 140 may be included between the plurality of battery cell stacks 101. The shape of the frame including an upper plate 110, a lower plate 120 and a side surface plate is not limited to the structure shown in FIGS. 12 and 13, and can be modified and changed in various ways to suit the environment in which the present invention is realized.

For reference, even in FIG. 13, the upper plate 110 and the lower plate 120 respectively refer to the upper plate of the frame and the lower plate of the frame, and for convenience, are abbreviated as the upper plate 110 and the lower plate 120. This should be understood as a separate concept from the upper plate of the coolant housing member 220 and the lower plate of the coolant housing member 220 based on the coolant housing member 220.

In FIG. 13, the cooling part 200 includes a coolant housing member 220 that houses the coolant. One surface of the coolant housing member 220 is disposed on at least one surface of the plurality of battery cell stacks 101. One surface of the coolant housing member 220 may be a heat dissipation plate 210. The other side facing one surface of the coolant housing member 220 may be the upper plate 110 of the frame. That is, when the coolant housing member 220 is provided on the upper part of the plurality of battery cell stacks 101, the upper plate of the coolant housing member 220 may be the upper plate 110 of the frame. The heat dissipation plate 210 includes a plurality of through holes 230. The through hole 230 is sealed with a sealing member 240.

On the other hand, the difference is that the coolant housing member 220 of the battery pack 100' of FIG. 13 is disposed on the plurality of battery cell stacks 101, while the coolant housing member 220a of the battery module or battery pack 100 of FIG. 2 is disposed on one battery cell stack 101, but the detailed components of the coolant housing member 220 of FIG. 13 overlaps with the detailed components of the coolant housing member 220a of the battery module or battery pack 100 of FIG. 2.

Therefore, the description regarding the detailed components of the coolant housing member 220 of FIG. 13 overlaps with the description of the detailed components of the coolant housing member 220a of the battery module or battery pack 100 of FIG. 2. Thus, for further explanation, refer to the contents described above in FIGS. 1 to 11. In addition, the description regarding the sections marked A and B in FIG. 13 also overlaps with the sections explained in FIGS. 6 and 9 to 11, and thus, refer to the contents described above in the relevant portion.

Further, FIG. 13 shows a case where the cooling part 200 is disposed on a plurality of battery cell stacks 101, but in some cases, various modifications and changes can be made, such as the cooling part 200 being disposed below the plurality of battery cell stacks 101. Of course, the partition wall 215 can also be applied to the cooling part 220 as described above in the embodiment of FIG. 4.

In this way, when using the battery module and/or battery pack and the cooling part included therein according to the present disclosure, the battery cell can be quickly cooled even if the battery cell ignites. Further, even if the coolant housing space is disposed obliquely, all of the coolant in the coolant housing space can be supplied to the ignited battery cell. A thermal runaway phenomenon of the battery cells can be efficiently suppressed while minimizing the increase in volume of the battery module and/or battery pack.

### [Description of Reference Numerals]

101: battery cell stack
110: upper plate
120: lower plate
130: side surface plate
200, 200a, 200a', 200b, 200b': cooling part
210, 310, 410, 510, 610: heat dissipate plate
215: partition wall
220, 320: coolant housing member
230, 230', 230", 267, 267', 330: through hole
240, 268, 268', 340, 440, 540, 640: sealing member
250: elastic member

## Claims

1. A battery pack comprising:
a battery cell stack (101) in which a plurality of battery cells are stacked;
a frame that houses the battery cell stack (101); and
a cooling part (200) disposed on the battery cell stack (101),
wherein the cooling part (200) comprises:
a coolant housing member (220) including an upper plate and a lower plate;
an elastic member (250) disposed in an inner space of the coolant housing member (220), wherein the elastic member (250) has a membrane shape; and
a sealing member (240) that seals at least one through hole (230) formed in the lower plate of the coolant housing member (220) and is meltable by an increase in a temperature of the battery cell, and
wherein a coolant is housed in a space between the elastic member (250) and the lower plate of the coolant housing member (220), and the elastic member (250) expands as the coolant is housed,
wherein the elastic member (250) covers a lower plate of the coolant housing member (220) including the at least one through hole (230).

2. The battery pack of claim 1, wherein:
when the sealing member (240) melts by an increase in the temperature of the battery cell, the elastic member (250) is configured to press the coolant and supply the coolant to the battery cell stack (101).

3. The battery pack of claim 1, wherein:
while the coolant is supplied to the battery cell stack (101), the elastic member (250) is configured to gradually contract as the pressure with which the coolant has pressed the elastic member (250) gradually decreases.

4. The battery pack of any one of claims 1 to 3, wherein:
the edge of the elastic member (250) having a membrane shape is fixed to an edge of the lower plate of the coolant housing member (220).

5. The battery pack of claim 4, wherein:
the edge of the elastic member (250) is interposed between respective edges of the upper and lower plates of the coolant housing member (220), and then subjected to seaming process, or
the edges of the upper and lower plates of the coolant housing member (220) are subjected to embossing process, the edge of the elastic member (250) is interposed therebetween, and then mechanically fastened.

6. The battery pack of claim 1, wherein:
before the sealing member (240) melts, the elastic member (250) is configured to expand to the maximum extent within the coolant housing member (220).

7. The battery pack of claim 1, wherein:
the lower plate of the coolant housing member (220) is a heat dissipation plate (210),
the coolant housing member (220) has a structure integrated into the frame, and the upper plate of the coolant housing member (220) constitutes a part of the frame.

8. The battery pack of claim 1, wherein:
the coolant housing member (220) has a structure for storing the coolant.

9. The battery pack of claim 1, wherein:
the coolant housing member (220) includes an inlet/outlet port for allowing a coolant to flow in and out, and the inlet/outlet port are located in a space between the lower plate of the coolant housing member (220) and the elastic member (250).

10. The battery pack of claim 1,
which comprises at least one partition wall (215) disposed in the inner space of the coolant housing member (220) to separate the inner space into a plurality of zones,
the at least one partition wall (215) is disposed perpendicularly to the one surface of the coolant housing member (220) and disposed in a longitudinal direction of the battery cell, and
the elastic member (250) is individually provided across each of the plurality of zones.

11. The battery pack of claim 1, wherein:
a melting point of the elastic member (250) is higher than a melting point of the sealing member (240).

12. The battery pack of claim 1, wherein:
the elastic member (250) is made of a material that is contractable and expandable while having a waterproof property.

13. The battery pack of claim 1, wherein:
the elastic member (250) has a double-layered structure of a band-shaped member that is contractable and expandable surrounded by a waterproof fabric.

14. The battery pack of claim 1, wherein:
the cooling part (200) is disposed on at least one of upper and lower surfaces of the battery cell stack (101).

15. The battery pack of claim 1, wherein:
the battery cell stacks (101) are provided in plural numbers, and
the cooling part (200) is disposed on the plurality of battery cell stacks (101).

## Patentansprüche

1. Batteriepack, umfassend:
einen Batteriezellenstapel (101), in dem eine Vielzahl von Batteriezellen gestapelt sind;
einen Rahmen, der den Batteriezellenstapel (101) aufnimmt; und
einen Kühlteil (200), der auf dem Batteriezellenstapel (101) angeordnet ist,
wobei der Kühlteil (200) umfasst:
ein Kühlmittelgehäuseelement (220), das eine obere Platte und eine untere Platte enthält;
ein elastisches Element (250), das in einem Innenraum des Kühlmittelgehäuseelements (220) angeordnet ist, wobei das elastische Element (250) eine Membranform aufweist; und
ein Dichtungselement (240), das mindestens ein Durchgangsloch (230) abdichtet, das in der unteren Platte des Kühlmittelgehäuseelements (220) ausgebildet ist, und durch einen Temperaturanstieg der Batteriezelle schmelzbar ist, und
wobei ein Kühlmittel in einem Raum zwischen dem elastischen Element (250) und der unteren Platte des Kühlmittelgehäuseelements (220) untergebracht ist, und sich das elastische Element (250) ausdehnt, wenn das Kühlmittel untergebracht wird,
wobei das elastische Element (250) eine untere Platte des Kühlmittelgehäuseelements (220) abdeckt, die das mindestens eine Durchgangsloch (230) enthält.

2. Das Batteriepack nach Anspruch 1, wobei:
wenn das Dichtungselement (240) durch einen Temperaturanstieg der Batteriezelle schmilzt, das elastische Element (250) so konfiguriert ist, dass es das Kühlmittel drückt und das Kühlmittel dem Batteriezellenstapel (101) zuführt.

3. Das Batteriepack nach Anspruch 1, wobei:
während das Kühlmittel dem Batteriezellenstapel (101) zugeführt wird, das elastische Element (250) so konfiguriert ist, dass es sich allmählich zusammenzieht, wenn der Druck, mit dem das Kühlmittel das elastische Element (250) gedrückt hat, allmählich abnimmt.

4. Das Batteriepack nach einem der Ansprüche 1 bis 3, wobei:
der Rand des elastischen Elements (250) mit einer Membranform an einem Rand der unteren Platte des Kühlmittelgehäuseelements (220) befestigt ist.

5. Das Batteriepack nach Anspruch 4, wobei:
der Rand des elastischen Elements (250) zwischen den jeweiligen Rändern der oberen und unteren Platten des Kühlmittelgehäuseelements (220) angeordnet und dann einem Falzprozess unterzogen wird, oder
die Ränder der oberen und unteren Platten des Kühlmittelgehäuseelements (220) einem Prägeprozess unterzogen werden, der Rand des elastischen Elements (250) dazwischen angeordnet und dann mechanisch befestigt wird.

6. Das Batteriepack nach Anspruch 1, wobei:
bevor das Dichtungselement (240) schmilzt, das elastische Element (250) so konfiguriert ist, dass es sich innerhalb des Kühlmittelgehäuseelements (220) maximal ausdehnt.

7. Das Batteriepack nach Anspruch 1, wobei:
die untere Platte des Kühlmittelgehäuseelements (220) eine Wärmeableitplatte (210) ist,
das Kühlmittelgehäuseelement (220) eine in den Rahmen integrierte Struktur aufweist, und die obere Platte des Kühlmittelgehäuseelements (220) einen Teil des Rahmens bildet.

8. Das Batteriepack nach Anspruch 1, wobei:
das Kühlmittelgehäuseelement (220) eine Struktur zur Speicherung des Kühlmittels aufweist.

9. Das Batteriepack nach Anspruch 1, wobei:
das Kühlmittelgehäuseelement (220) eine Einlass-/Auslassöffnung aufweist, um einem Kühlmittel das Ein- und Ausströmen zu ermöglichen, und die Einlass-/Auslassöffnung in einem Raum zwischen der unteren Platte des Kühlmittelgehäuseelements (220) und dem elastischen Element (250) angeordnet ist.

10. Das Batteriepack nach Anspruch 1,
das mindestens eine Trennwand (215) umfasst, die in dem Innenraum des Kühlmittelgehäuseelements (220) angeordnet ist, um den Innenraum in eine Vielzahl von Zonen zu trennen,
wobei die mindestens eine Trennwand (215) senkrecht zu der einen Oberfläche des Kühlmittelgehäuseelements (220) und in einer Längsrichtung der Batteriezelle angeordnet ist, und
das elastische Element (250) individuell über jede der Vielzahl von Zonen vorgesehen ist.

11. Das Batteriepack nach Anspruch 1, wobei:
ein Schmelzpunkt des elastischen Elements (250) höher ist als ein Schmelzpunkt des Dichtungselements (240).

12. Das Batteriepack nach Anspruch 1, wobei:
das elastische Element (250) aus einem Material hergestellt ist, das zusammenziehbar und ausdehnbar ist, während es eine wasserdichte Eigenschaft aufweist.

13. Das Batteriepack nach Anspruch 1, wobei:
das elastische Element (250) eine doppelschichtige Struktur eines bandförmigen Elements aufweist, das zusammenziehbar und ausdehnbar ist und von einem wasserdichten Gewebe umgeben ist.

14. Das Batteriepack nach Anspruch 1, wobei:
der Kühlteil (200) auf mindestens einer von der oberen und unteren Oberfläche des Batteriezellenstapels (101) angeordnet ist.

15. Das Batteriepack nach Anspruch 1, wobei:
die Batteriezellenstapel (101) in einer Mehrzahl vorgesehen sind, und
der Kühlteil (200) auf der Vielzahl von Batteriezellenstapeln (101) angeordnet ist.

## Revendications

1. Bloc-batterie comprenant :
un empilement de cellules de batterie (101) dans lequel une pluralité de cellules de batterie sont empilées ;
un cadre qui loge l'empilement de cellules de batterie (101) ; et
une partie de refroidissement (200) disposée sur l'empilement de cellules de batterie (101),
dans lequel la partie de refroidissement (200) comprend :
un élément de logement de liquide de refroidissement (220) incluant une plaque supérieure et une plaque inférieure ;
un élément élastique (250) disposé dans un espace intérieur de l'élément de logement de liquide de refroidissement (220), dans lequel l'élément élastique (250) a une forme de membrane ; et
un élément d'étanchéité (240) qui obture au moins un trou traversant (230) formé dans la plaque inférieure de l'élément de logement de liquide de refroidissement (220) et est fusible par une augmentation de la température de la cellule de batterie, et
dans lequel un liquide de refroidissement est logé dans un espace entre l'élément élastique (250) et la plaque inférieure de l'élément de logement de liquide de refroidissement (220), et l'élément élastique (250) se dilate à mesure que le liquide de refroidissement est introduit,
dans lequel l'élément élastique (250) recouvre une plaque inférieure de l'élément de logement de liquide de refroidissement (220) incluant l'au moins un trou traversant (230).

2. Le bloc-batterie selon la revendication 1, dans lequel :
lorsque l'élément d'étanchéité (240) fond par une augmentation de la température de la cellule de batterie, l'élément élastique (250) est configuré pour presser le liquide de refroidissement et fournir le liquide de refroidissement à l'empilement de cellules de batterie (101).

3. Le bloc-batterie selon la revendication 1, dans lequel :
pendant que le liquide de refroidissement est fourni à l'empilement de cellules de batterie (101), l'élément élastique (250) est configuré pour se contracter progressivement à mesure que la pression avec laquelle le liquide de refroidissement a pressé l'élément élastique (250) diminue progressivement.

4. Le bloc-batterie selon l'une quelconque des revendications 1 à 3, dans lequel :
le bord de l'élément élastique (250) ayant une forme de membrane est fixé à un bord de la plaque inférieure de l'élément de logement de liquide de refroidissement (220).

5. Le bloc-batterie selon la revendication 4, dans lequel :
le bord de l'élément élastique (250) est interposé entre des bords respectifs des plaques supérieure et inférieure de l'élément de logement de liquide de refroidissement (220), puis soumis à un processus d'agrafage, ou
les bords des plaques supérieure et inférieure de l'élément de logement de liquide de refroidissement (220) sont soumis à un processus de gaufrage, le bord de l'élément élastique (250) est interposé entre eux, puis fixé mécaniquement.

6. Le bloc-batterie selon la revendication 1, dans lequel :
avant que l'élément d'étanchéité (240) ne fonde, l'élément élastique (250) est configuré pour se dilater au maximum à l'intérieur de l'élément de logement de liquide de refroidissement (220).

7. Le bloc-batterie selon la revendication 1, dans lequel :
la plaque inférieure de l'élément de logement de liquide de refroidissement (220) est une plaque de dissipation de chaleur (210),
l'élément de logement de liquide de refroidissement (220) a une structure intégrée dans le cadre, et la plaque supérieure de l'élément de logement de liquide de refroidissement (220) constitue une partie du cadre.

8. Le bloc-batterie selon la revendication 1, dans lequel :
l'élément de logement de liquide de refroidissement (220) a une structure pour stocker le liquide de refroidissement.

9. Le bloc-batterie selon la revendication 1, dans lequel :
l'élément de logement de liquide de refroidissement (220) inclut un orifice d'entrée/sortie pour permettre à un liquide de refroidissement d'entrer et de sortir, et l'orifice d'entrée/sortie est situé dans un espace entre la plaque inférieure de l'élément de logement de liquide de refroidissement (220) et l'élément élastique (250).

10. Le bloc-batterie selon la revendication 1,
qui comprend au moins une paroi de séparation (215) disposée dans l'espace intérieur de l'élément de logement de liquide de refroidissement (220) pour séparer l'espace intérieur en une pluralité de zones,
l'au moins une paroi de séparation (215) est disposée perpendiculairement à la une surface de l'élément de logement de liquide de refroidissement (220) et disposée dans une direction longitudinale de la cellule de batterie, et
l'élément élastique (250) est prévu individuellement à travers chacune de la pluralité de zones.

11. Le bloc-batterie selon la revendication 1, dans lequel :
un point de fusion de l'élément élastique (250) est supérieur à un point de fusion de l'élément d'étanchéité (240).

12. Le bloc-batterie selon la revendication 1, dans lequel :
l'élément élastique (250) est fait d'un matériau qui est contractable et expansible tout en ayant une propriété d'étanchéité à l'eau.

13. Le bloc-batterie selon la revendication 1, dans lequel :
l'élément élastique (250) a une structure à double couche d'un élément en forme de bande qui est contractable et expansible, entouré par un tissu imperméable.

14. Le bloc-batterie selon la revendication 1, dans lequel :
la partie de refroidissement (200) est disposée sur au moins une des surfaces supérieure et inférieure de l'empilement de cellules de batterie (101).

15. Le bloc-batterie selon la revendication 1, dans lequel :
les empilements de cellules de batterie (101) sont prévus en plusieurs nombres, et
la partie de refroidissement (200) est disposée sur la pluralité d'empilements de cellules de batterie (101).
